# EUROPEAN PATENT APPLICATION

(11) **EP 4 751 875 A1**
(43) Date of publication of application: **03.06.2026**
(21) Application number: 24845115.5
(22) Date of filing: 08.04.2024
(51) Int. Cl.: B29C 48/92, B29C 48/08, B29C 55/14, B65H 23/198

(54) **ESTIMATION METHOD, COMPUTER PROGRAM, ESTIMATION DEVICE, AND ESTIMATION SYSTEM**

(30) Priority: 25.07.2023 JP 2023120958
(71) Applicant: The Japan Steel Works, Ltd., Tokyo 141-0032 (JP)
(72) Inventor: FUKUSHI, Yusuke, Tokyo 141-0032 (JP); KUSHIZAKI, Yoshiyuki, Tokyo 141-0032 (JP); OCHIIWA, Takashi, Tokyo 141-0032 (JP)
(74) Representative: Simmons & Simmons LLP (Munich)
(86) International application number: PCT/JP2024/014213
(87) International publication number: WO 2025/022730

(57) **Abstract**

An estimation method and the like that can estimate a state of a film molding machine is provided.

An estimation method includes acquiring detection data related to a state of the film molding machine detected by a detector; and estimating abnormality or life of the film molding machine by inputting the acquired detection data to an estimation model, the estimation model estimating abnormality or life of a film molding machine in a case where detection data related to a state of the film molding machine is input.

## Description

### Technical Field

The present invention relates to an estimation method, a computer program, an estimation device and an estimation system.

### Background Art

Film molding machines have conventionally been in widespread use that mold films by solidifying molten resin extruded from an ejection opening of a die, and techniques concerning such molding machines have been proposed.

For example, Patent Literature 1 discloses a film molding machine that can determine the presence or absence of abnormality for the appearance of a film roll based on change in radius of the film roll in the axial direction.

### Citation List

### Patent Literature

Patent Literature 1: Japanese Patent Application Laid-Open Publication No. 2019-177508

### Summary of Invention

### Technical Problems

The technique described in Patent Literature 1 is, however, a technique related to determination of a condition of a molded product, but is not a technique for estimating a state of a film molding machine. Techniques that can estimate a state of a film molding machine have been desired.

An object of the present disclosure is to provide an estimation method and the like that can estimate a state of the film molding machine.

### Solution to Problems

An estimation method according to one aspect of the present disclosure, includes: acquiring detection data related to a state of a film molding machine detected by a detector; and estimating abnormality or life of the film molding machine by inputting the acquired detection data to an estimation model, the estimation model estimating abnormality or life of a film molding machine in a case where detection data related to a state of the film molding machine is input.

A computer program according to one aspect of the present disclosure causing a computer to execute processing of: acquiring detection data related to a state of a film molding machine detected by a detector; and estimating abnormality or life of the film molding machine by inputting the acquired detection data to an estimation model, the estimation model estimating abnormality or life of a film molding machine in a case where detection data related to a state of the film molding machine is input.

An estimation device according to one aspect of the present disclosure includes: an acquisition unit that acquires detection data related to a state of a film molding machine detected by a detector; and an estimation unit that estimates abnormality or life of the film molding machine by inputting the acquired detection data to an estimation model, the estimation model estimating abnormality or life of a film molding machine in a case where detection data related to a state of the film molding machine is input.

An estimation system according to one aspect of the present disclosure includes: a film molding machine; a detector; and an estimation device, and the estimation device comprises an acquisition unit that acquires detection data related to a state of the film molding machine detected by the detector, and an estimation unit that estimates abnormality or life of the film molding machine by inputting the acquired detection data to an estimation model, the estimation model estimating abnormality or life of a film molding machine in a case where detection data related to a state of the film molding machine is input.

### Advantageous Effects of Invention

According to the present disclosure, it is possible to estimate a state of the film molding machine.

### Brief Description of Drawings

FIG. 1 is a schematic diagram of an estimation system according to Embodiment 1.
FIG. 2 is a block diagram illustrating an example of the configuration of a data collection device.
FIG. 3 is a block diagram illustrating an example of the configuration of an estimation device.
FIG. 4 is an example of the contents of information stored in a molding information DB.
FIG. 5 is an explanatory view depicting the outline of an estimation model.
FIG. 6 is a flowchart illustrating one example of a processing procedure to be executed by the estimation device.
FIG. 7 is a schematic diagram depicting one example of a screen depicting estimation results of abnormality and life displayed on a terminal device.
FIG. 8 is a flowchart illustrating an example of the processing procedure to be executed by an estimation device according to Embodiment 2.

### Description of Embodiments

The present disclosure will be specifically described with reference to the drawings illustrating an embodiment thereof.

### Embodiment 1

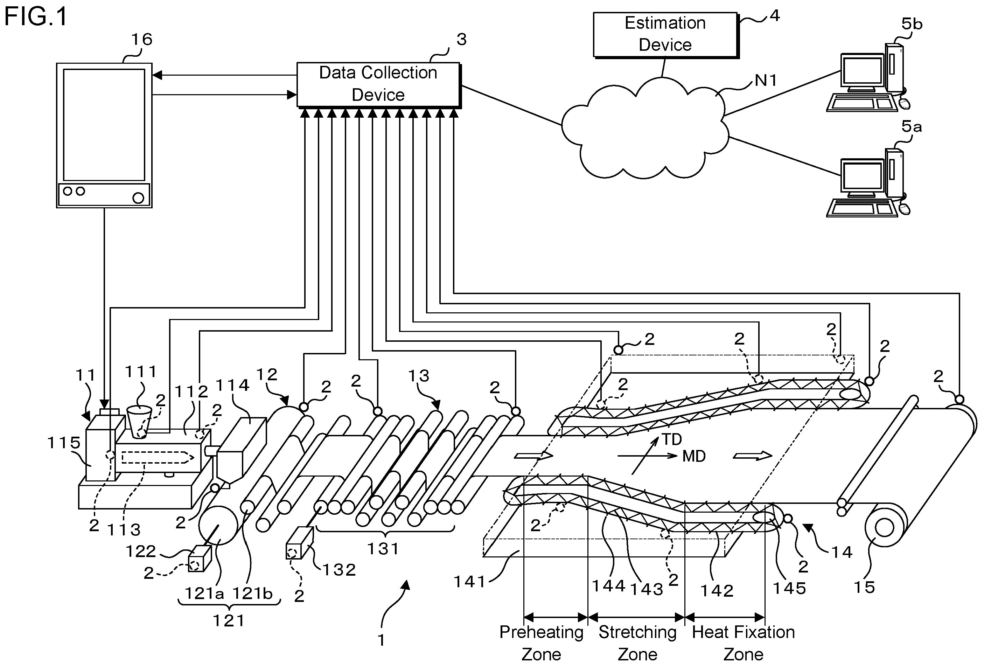

FIG. 1 is a schematic diagram of an estimation system 100 according to Embodiment 1. The estimation system 100 includes a film molding machine 1, multiple detectors 2 and an estimation device 4 as main devices. The estimation device 4 is communicatively connected to a data collection device 3 and terminal devices 5a, 5b over a network N1 such as the Internet or the like.

While one film molding machine 1 and one data collection device 3 are illustrated in FIG. 1, multiple data collection devices 3 (not illustrated) are connected to the estimation device 4 through a network N1. The data collection device 3 is connected to one or more film molding machines 1. Each of the data collection devices 3 and one or more film molding machines 1 that are connected to the data collection device 3 are installed in the same factory, for example.

The estimation device 4 is a device that enables various information processing and transmission and reception of information, and includes, for example, a server computer, a personal computer and a quantum computer. The estimation device 4 collects molding information for each of the multiple film molding machines 1, and estimates the abnormality or life of each of the film molding machines 1 based on the collected molding information. The molding information includes operation data and detection data to be described later. The estimation device 4 transmits an estimation result of abnormality or life to the terminal devices 5a, 5b.

The terminal devices 5a, 5b are each an information processing terminal with a communication function and a display function, including a personal computer, a tablet terminal and a smartphone, for example. The terminal device 5a is a terminal to be used by the user of the film molding machine 1. The user of the film molding machine 1 includes organizations such as a corporation that owns the film molding machine 1 and an operator who belongs to the organization. The terminal device 5b is a terminal to be used by a service provider such as a sales representative or a maintenance manager who is associated with the film molding machine 1 of the user. The number of terminal devices 5a, 5b may be two or more.

### <Film Molding Machine 1>

The film molding machine 1 forms a resin thin film (film) by extrusion molding. The film molding machine 1 is provided with an extruder 11, a casting device 12, an MD stretcher 13, a TD stretcher 14, a winder 15 and a control device 16.

The extruder 11, which is, for example, a single extruder or a twin-screw extruder, is provided with a material supply unit 111 through which resin materials are fed, a cylinder 112, a screw 113 and a die 114. The material supply unit 111, which is provided with a hopper for storing resin raw materials and a feeder for feeding resin raw materials, delivers resin raw materials fed into the hopper from the feeder into the cylinder 112 at a constant flow rate. The screw 113 is rotatably inserted into a hole of the cylinder 112. The screw 113 carries the resin raw materials delivered from the raw material supply unit 111 in the direction of extrusion (to the right in FIG. 1), and melts and kneads the resin raw materials. The screw 113 is rotated at predetermined rotational speed by a driving force from a driving device 115 containing a motor and a gear reducer (not illustrated), for example. The extruder 11 extrudes the melted resin raw materials into a film through a narrow gap (lip) at the tip of the die 114. The die 114 is a T die, for example.

The casting device 12 is provided with multiple cast rolls 121 for cooling and molding a high-temperature molten product extruded from the die 114. The cast rolls 121 are rotated at predetermined rpm (revolutions per minute) by a driving force from a driving device 122 containing a motor and a gear reducer (not illustrated), for example. The multiple cast rolls 121 include a first roll 121a and a second roll 121b.

The first roll 121a is a metal roll with a temperature control part (not illustrated) for cooling a molten product, for example, and is journaled below the die 114. The first roll 121a holds a film-like molten product extruded from the die 114 between itself and the second roll 121b, and molds the molten product in a film (sheet) form while cooling it in a short time together with the second roll 121b. The casting device 12 controls the thickness of a film so as to fall within a predetermined range, which provides an unstretched film. The temperature adjustment method of the first roll 121a includes, but not particularly limited to, a method using a heat medium such as air, water, oil or the like, or a method with an electric heater or dielectric heating, for example. In the example illustrated in FIG. 1, the multiple cast rolls 121 further include rolls for cooling or conveying the molten product.

The MD stretcher 13 includes multiple tension rolls 131, passing the unstretched film conveyed from the casting device 12 between the tension rolls 131 and stretching it in the MD. The MD is a direction along a film conveyance direction and is also referred to as a longitudinal direction. The tension rolls 131 are rotated at predetermined rpm by a driving force output from a driving device 132 containing a motor and a gear reducer (not illustrated), for example.

The multiple tension rolls 131 include a heating roll with a temperature adjustment part for heating a film and a cooling roll with a temperature adjustment part for cooling a film. The temperature adjustment method for the tension rolls 131 includes methods similar to those for the cast roll 121 as described above. The film is heated to a predetermined temperature range in which it is stretchable while in contact with the heating roll, and then stretched in the MD using the difference in rotational speed between the cooling rolls. The stretching ratio in the MD can be adjusted by a velocity ratio between the tension rolls 131. Note that FIG. 1 is a mere example, and the number of tension rolls 131 is not limited to the example illustrated in FIG. 1.

The TD stretcher 14 stretches the film, having longitudinally been stretched by the MD stretcher 13, in the TD. The TD is a direction (film width direction) crossing the film conveyance direction and is also referred to as a transverse direction.

The TD stretcher 14, which is a tenter stretcher, for example, and has a heating device such as a hot air blower (not illustrated), transversely stretches the film while heating the film to a predetermined temperature range that makes the film stretchable.

The TD stretcher 14 has an oven 141 having a heating device such as a hot air blower. The oven 141 contains a flying mechanism containing a pair of left and right rails 142 and multiple links 143 disposed on the rails 142. The rails 142 are positioned so as to spread in the TD downstream of the MD. The multiple links 143 form an endless chain. The endless chain composed of the multiple links 143 runs on the rails 142 at predetermined speed by a rotational driving force output from a link driving device 145 located outside the oven 141.

The multiple links 143 are each attached with a clip 144, which is a film gripper. The number of links 143 and the number of clips 144 on the right and left rails 142 are the same. That is, the TD stretcher 14 is provided with pairs of left and right links 143 and pairs of left and right clips 144. The pairs of links 143 and the pairs of clips 144 are positioned on the rails 142 so that they are located at the left and right sides of the film, that is, they are arranged in lines along the TD. By synchronizing with the driving device in advance, the pairs of left and right clips 144 are adjusted so that the phase difference between the clips 144 does not occur, that is, the conveyance periods coincide. The TD stretcher 14 may be of a bearing clip type or a slide clip type.

Both edge of the film is grasped by the clips 144 at the entrance of the TD stretcher 14. The clips 144 are conveyed in the film conveyance direction together with the links 143 while gripping the film, and travel on the rails 142 to convey the film in the film conveyance direction. The film located inside the oven are heated on both surfaces by air blown from the hot air blower disposed above and below the running mechanism, and stretched in the width direction as the clips 144 gripping both edges of the film move. The stretching factor in the TD can be adjusted by the width in the TD of the rail 142. The oven 141 is divided into several zones in the conveyance direction, for example, which makes it possible to adjust a setting temperature or air flow for each zone. The aforementioned zones include a preheating zone, a stretching zone and a heat fixation zone.

The clips 144 release the film at the exit of the TD stretcher 14. The film stretched in the width direction is wound up by the winder 15 via a pick-up machine (not illustrated). The TD stretcher 14 is not limited to a clip tenter, but may be, for example, a pin tenter with pins as a film gripper. The description of each of the components for the above-mentioned TD stretcher 14 is one example, and the temperature adjustment, air flow adjustment as well as the configuration of the links 143 on the rails 142 are not particularly limited.

The film molding machine 1 performs continuous operation without stopping except for specific timing such as the occurrence of device abnormality or a preset shutdown period.

The control device 16 is a computer for performing operation control of the film molding machine 1. The control device 16 is provided with, though not illustrated, a control unit such as a CPU (Central Processing Unit) or the like, a storage unit such as a ROM (Read Only Memory), a RAM (Random Access Memory), a hard disk or the like, a communication unit for transmitting and receiving information to and from external devices in a wired or wireless manner, a display unit such as a liquid crystal display or an organic EL (Electro Luminescence) display for presenting various images to the user and an operation unit or the like for accepting operation from the user.

The control device 16 is a computer for performing operation control of the film molding machine 1. The control device 16 accepts setting of molding condition parameters for the film molding machine 1 through the operation unit or the communication unit. The control device 16 further receives detection data detected by the detectors 2 from the data collection device 3 through the communication unit. The control device 16 controls the operation of the film molding machine 1 based on the received molding condition parameter and detection data. The control device 16 further transmits operation data indicating an operation state of the film molding machine 1 to the data collection device 3 through the communication unit. The data collection device 3 transmits the received operation data to the estimation device 4. The operation data may directly be transmitted to the estimation device 4 from a device such as a motor, an inverter or the like in the film molding machine 1, for example, without going through the data collection device 3.

The film molding machine 1 is configured with molding condition parameters for defining molding conditions and operates according to the molding condition parameters. The molding condition parameters include a feeder supply amount, rpm or rotational speed of the screw 113, rpm or rotational speed of the motor for the driving device 115 and the degree of opening of the lip of the die 114 that are in the extruder 11, rpm or rotational speed of the cast roll 121, rpm or rotational speed of the motor for the driving device 122 and the film discharge volume that are in the casting device 12, rpm or rotational speed of the tension roll 131, rpm or rotational speed of the motor for the driving device 132, a stretching factor and film discharge volume that are in the MD stretcher 13, and speed of a film conveyance line, temperature (especially for each zone) inside the oven 141, pressure (especially for each zone) inside the oven 141, air volume or flow rate, a stretching angle, a stretching factor and film discharge volume at the inlet and outlet of the oven 141 (especially an air blowing nozzle of the hot air blower in the vicinity of the inlet and the outlet) that are in the TD stretcher 14. Note that film speed, film width and film thickness may be set instead of the film discharge amount. The optimum molding condition parameters vary from time to time during operation depending on the environment of the film molding machine 1 and the state of a molded product.

The operation data of the film molding machine 1 includes, for example, a feeder supply amount, temperature of the cylinder 112, rpm of the screw 113, rpm of the motor, torque of the motor, and motor current in the extruder 11, rpm of the cast roll 121, rpm of the motor, torque of the motor and motor current in the casting device 12, rpm of the tension roll 131, rpm of the motor, torque of the motor and motor current for the MD stretcher 13, and speed of the line, a tension of the line in the TD stretcher 14. The operation data corresponds to set values for items, that is, control values by the control device 6.

### <Detector 2>

The detectors 2 are sensors for detecting in time series physical quantities indicative of the state of the film molding machine 1. The state of the film molding machine 1 detected by the detectors 2 includes the state of a film (resin) molded by the film molding machine 1 as well as the state of the film molding machine 1 itself. The detectors 2 are connected to the data collection device 3 in a wired or wireless manner and directly or indirectly outputs detection data obtained by detection to the data collection device 3.

The estimation system 100 is provided with multiple detectors 2 for detecting various detection data. A part of the multiple detectors 2 are connected to the data collection device 3, so that the data collection device 3 acquires detection data from the detectors 2. Another part of the multiple detectors 2 are connected to the control device 16, so that the data collection device 3 acquires detection data from the detectors 2 via the control device 16. The wire connections between a part of the detectors 2 and the data collection device 3 or the control device 16 are not illustrated in FIG.1.

Detectors 2 include those for detecting sensor values necessary for operation control of the film molding machine 1 and those for detecting sensor values necessary for estimating the abnormality or life of the film molding machine 1 according to the present estimation method. The detectors 2 may be configured separately from the film molding machine 1 or may be configured to be incorporated into the film molding machine 1.

The detectors 2 include, for example, an accelerometer, a speed sensor, a displacement sensor, an AE (Acoustic Emission) sensor, a viscometer, a gel counter, a distortion sensor, a crystal orientation sensor, an anemometer, an airflow meter, a thermometer, an surface potential sensor, a laser sensor, an infrared sensor, an X-ray sensor, a position sensor, a tension sensor, a load cell, a torque sensor, an encoder, an ammeter, a tachometer, an angular sensor, a pressure sensor, a weight meter, a length measurement sensor, a photosensor (camera), a flowmeter, a voltmeter, a timer and a wattmeter.

The detection data detected by the detectors 2 include, for example, acceleration, velocity, displacement, viscosity, gel count, distortion, crystal orientation degree, air speed, air volume, temperature, charge amount, position, phase difference, tension, torque, rpm, angle, pressure, weight, length, thickness, image, flow rate, current, voltage, time, force and power consumption. Note that the detection data detected by the detectors 2 may herein also include data of the calculation values indirectly calculated from the sensor values, not limited to data of the sensor values directly detected by the detectors 2.

Detection data and the detectors 2 for the detection data that are associated with the extruder 11 include, for example, an accelerometer for detecting acceleration (vibration) of the reduction gear, a tachometer for detecting rpm of the screw 113 or the motor, a tachometer for detecting rotational speed of the screw 113 or the motor, a torque sensor for detecting torque of the motor, an ammeter for detecting motor current, a viscometer for detecting resin viscosity (especially resin viscosity directly after ejection of the die 114), a contact thermometer or contactless thermography camera for detecting temperature inside the cylinder 112 or the temperature of the resin (especially resin directly after ejection of the die 114), a laser displacement sensor for detecting the degree of opening of the lip of the die 114 and a weight meter for detecting feeder supply amount.

Detection data and the detectors 2 for the detection data that are associated with the casting device 12 include, for example, an accelerometer for detecting acceleration (vibration) of the bearing of the cast roll 121, a speed sensor for detecting rotational speed of the cast roll 121 or the motor, a tachometer for detecting rpm of the cast roll 121 or the motor, a torque sensor for detecting torque of the motor, an ammeter for detecting motor current, a thermometer or thermography camera for detecting temperature of the cast roll 121 or a film, a laser sensor for detecting width of the film, a laser thickness sensor for detecting thickness of the film and a gel counter for detecting the number of gels (especially, the film downstream of the cast roll 121).

Detection data and the detectors 2 for the detection data that are associated with the MD stretcher 13 include, for example, an accelerometer for detecting acceleration (vibration) of the bearing of the tension roll 131, a tachometer for detecting rpm of the tension roll 131 or the motor, a speed sensor for detecting rotational speed of the tension roll 131 or the motor, a torque sensor for detecting torque of the motor, an ammeter for detecting motor current, a thermometer or thermography camera for detecting temperature of the tension roll 131 or a film, a laser sensor for detecting width of the film, and a laser sensor for detecting thickness of the film.

Detection data and the detectors 2 for the detection data that are associated with the TD stretcher 14 include, for example, an accelerometer for detecting acceleration (vibration) of the TD stretcher 14 (especially rails 142 at the vicinity of the start and end points of the stretching zone inside the oven 141), a speed sensor for detecting speed (vibration), a displacement sensor for detecting displacement (vibration), an AE sensor for detecting elastic wave, a distortion sensor for detecting distortion of the clips 144, a laser sensor for detecting a phase difference (time deviation when the clips 144 pass through a reference position) between a pair of left and right clips 144, a photosensor or photo-electronic sensor, a thermometer or thermography camera for detecting temperature inside the oven 141 (especially, for each zone), a pressure sensor for detecting pressure inside the oven 141 (especially, for each zone), an anemometer for detecting air volume at the inlet and outlet of the oven 141 (especially an air blowing nozzle of the hot air blower in the vicinity of the inlet and the outlet), an airflow meter for detecting flow rate at the inlet and outlet of the oven 141 (especially an air blowing nozzle of the hot air blower in the vicinity of the inlet and the outlet), a pressure meter for detecting pressure at the inlet and outlet of the oven 141 (especially an air blowing nozzle of the hot air blower in the vicinity of the inlet and the outlet), a tachometer for detecting rpm of the fan in the hot air blower, a speed sensor for detecting speed of the line of the film conveyance line, a tension sensor for detecting a tension of the film conveyance line or the clips 144, a crystal orientation sensor for detecting a crystal orientation degree in the film (especially the film most downstream of the TD stretcher 14), a gel counter for detecting the number of gels on the film (especially most downstream of the TD stretcher 14), a laser sensor for detecting width of the film and a laser sensor for detecting thickness of the film.

Detection data and the detectors 2 for the detection data that are associated with the winder 15 include, for example, a surface potential sensor for detecting a charge amount on a film.

The detectors 2 are provided at suitable positions in the film molding machine 1 or suitable positions near the film molding machine 1 so as to detect the states of the components and the film at desired positions in the film molding machine 1. The detectors 2 preferably have heat resistance, water resistance, oil resistance or the like depending on the set positions. Note that the details of the detectors 2 and the detection data are not limited to the above-mentioned example. The above-mentioned detection data is not limited to the data detected by the detectors 2 exemplified in combination, and the detectors 2 are not limited to ones for detecting the detection data exemplified in combination.

### <Data Collection Device 3>

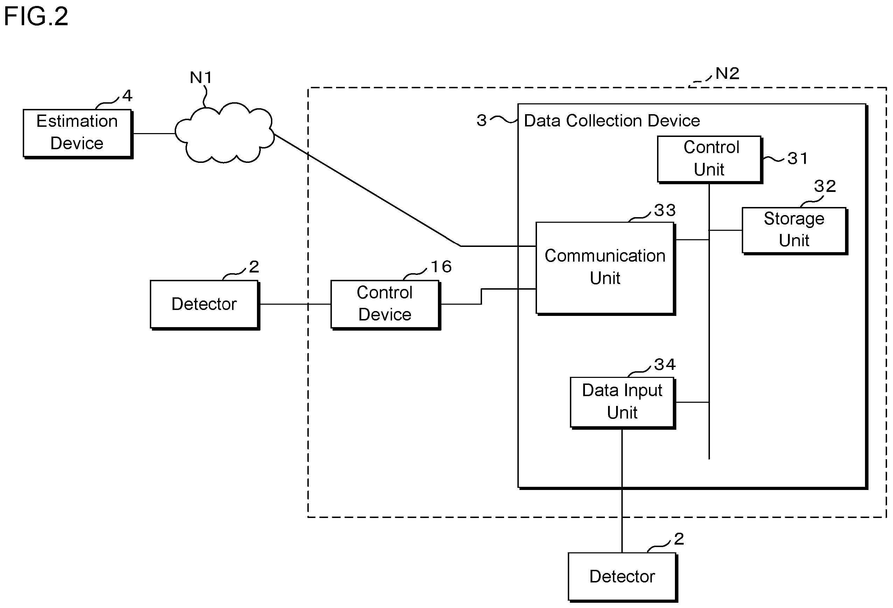

FIG. 2 is a block diagram depicting an example of the configuration of the data collection device 3. The data collection device 3, which is a computer, is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory), an I/O terminal and the like. The control unit 31 executes a control program stored in the storage unit 32, which will be described later, to perform processing of collecting molding information including detection data and operation data and transmitting it to the estimation device 4. Note that each functional part of the data collection device 3 may be realized in software or in hardware, or in combination thereof.

The storage unit 32 is provided with a nonvolatile memory such as a hard disk, an EEPROM (Electrically Erasable Programmable ROM), a flash memory or the like. The storage unit 32 stores a control program for causing the computer to execute processing of collecting molding information.

The communication unit 33 is provided with a communication device for achieving communication through networks N1 and N2. The communication unit 33 is connected to the control device 16 through the network N2 such as a LAN (Local Area Network) or the like. The control unit 31 can transmit and receive various information to and from the control device 16 via the communication unit 33. The communication unit 33 is also connected to the estimation device 4 on a cloud, which is the network N1, through a relay device (not illustrated). The relay device is a router, a gateway and the like. The control unit 31 can transmit and receive various information to and from the estimation device 4 via the relay device and the communication unit 33.

The data input unit 34 is an input interface to which signals output from the detectors 2 are input. The data input unit 34 is connected to the detectors 2. The control unit 31 acquires detection data output from the detectors 2 via the data input unit 34 as needed.

The data collection device 3 and the control device 16 are not limited to separate devices but may be configured as a common single device.

### <Estimation Device 4>

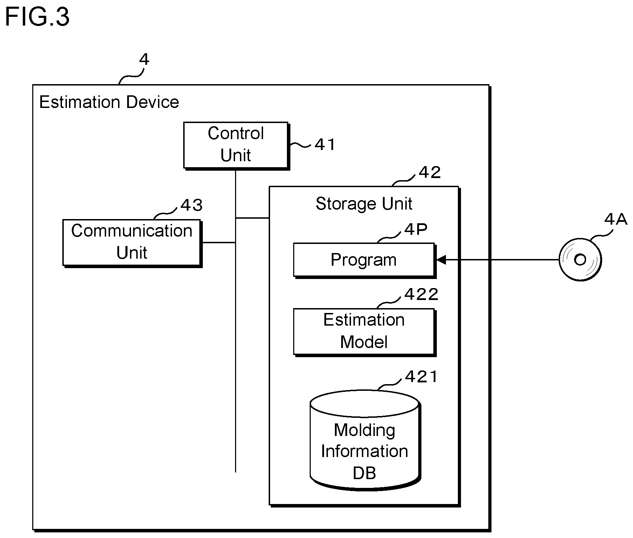

FIG. 3 is a block diagram illustrating an example of the configuration of the estimation device 4. The estimation device 4 is provided with a control unit 41, a storage unit 42 and a communication unit 43. The storage unit 42 and the communication unit 43 are connected to the control unit 41. The estimation device 4 may be configured with multiple computers to perform distributed processing, may be realized by multiple virtual machines set up in a single server, or may be realized using a cloud server.

The control unit 41 has an arithmetic processing circuit such as a CPU, a multi-core CPU, an ASIC or an FPGA, an internal storage device such as a ROM or a RAM, an I/O terminal and the like. Note that each functional part of the estimation device 4 may be realized in software or in hardware, or in combination thereof.

The storage unit 42 has a nonvolatile memory such as, for example, a hard disk, a flash memory, an SSD (Solid State Drive) or the like. The storage unit 42 may be an external storage device connected to the estimation device 4. The storage unit 42 stores various computer programs and data to be referred to by the control unit 41. The storage unit 42 of the present embodiment stores a program 4P for causing the computer to execute processing related to estimation of the abnormality or life of the film molding machine 1, a molding information DB (Data Base) 421 necessary for executing the program 4P and an estimation model 422. The molding information DB 421 is a database storing molding information received from each of the data collection devices 3. The estimation model 422 is a learning model generated by machine learning. The estimation model 422 is expected to be used as a program module that is part of artificial intelligence software.

The computer program (computer program product) including the program 4P may be provided in a non-transitory storage medium 4A readably recording the computer program. The storage unit 42 stores the computer program read from the recording medium 4A by a read-out device (not illustrated). The recording medium 4A is, for example, a magnetic disk, an optical disk, a semiconductor memory or the like. Moreover, the computer program may be downloaded from an external server connected to a communication network and stored in the storage unit 42. The program 4P may be constructed by a single computer program or multiple computer programs, or may be executed on a single computer or may be executed on multiple computers interconnected over a communication network.

The communication unit 43 is provided with a communication device that realizes communication through the network N1. The control unit 41 can transmit and receive various information to and from the data collection device 3 and the terminal devices 5a, 5b via the communication unit 43.

### <Molding Information DB 421>

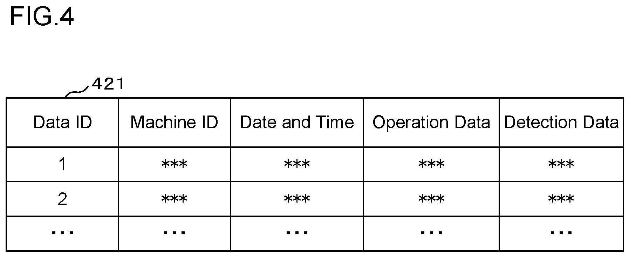

FIG. 4 is an example of the contents of the information stored in the molding information DB 421. The molding information DB 421 stores records of information such as a machine ID, date and time, operation data, detection data and the like that are associated using the data ID as a key. The machine ID indicates a machine identifier of the film molding machine 1. The date and time indicates the year, month and date when the operation data or detection data stored as a record is acquired. The operation data includes the aforementioned various types of operation data. The detection data includes the aforementioned various types of detection data. Each time the estimation device 4 receives operation data and detection data from the data collection device 3, it stores them in time series in the molding information DB 421. The contents of the molding information DB 421 are updated as needed.

### <Estimation Model 422>

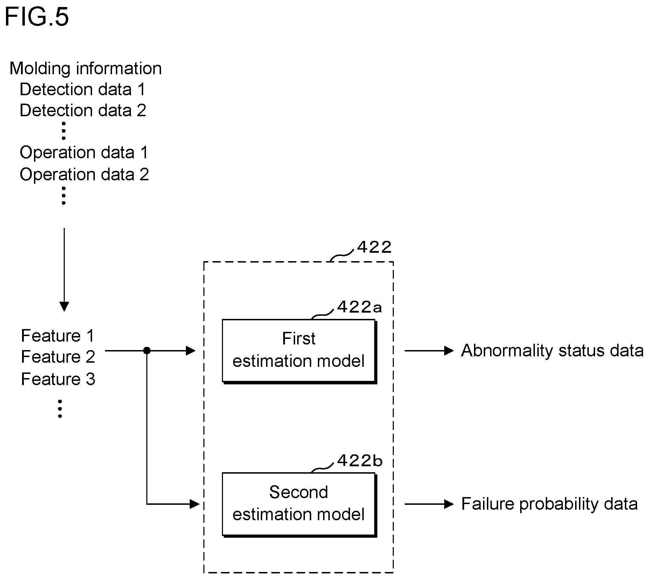

FIG. 5 is an explanatory view depicting the outline of the estimation model 422. FIG. 5 illustrates the estimation model 422 that is composed of a first estimation model 422a and a second estimation model 422b as an example. The first estimation model 422a is a learning model that receives, as an input, molding information including detection data and operation data of the film molding machine 1 and outputs abnormality status data indicating the presence or absence of abnormality of the film molding machine 1. The second estimation model 422b is a learning model that receives, as an input, molding information including detection data and operation data of the film molding machine 1 and outputs failure probability data indicating a failure probability of the film molding machine 1 at a predetermined time point. Since the first estimation model 422a and the second estimation model 422b have a similar configuration, the configuration of the first estimation model 422a is described below as an example.

The first estimation model 422a is, for example, a neural network. The first estimation model 422a has an input layer to which molding information is input, an output layer from which abnormality status data or failure probability data is output, and an intermediate layer (hidden layer) that extracts features. The intermediate layer may include convolutional layers, pooling layers and a fully connected layer. The intermediate layer has multiple nodes to extract the features of the input data, and passes the features extracted using various parameters to the output layer. When molding information is input to the input layer, arithmetic operation is performed in the intermediate layer according to the trained parameters, and output information indicating abnormality status data or failure probability data is output from the output layer.

To the input layer of the first estimation model 422a, the aforementioned various types of detection data and operation data are input. The detection data includes detection data detected by the detectors 2 for estimating a state. The detection data may further include detection data detected by the detectors 2 for controlling operation.

In the present embodiment, as the input information to the first estimation model 422a, various features evaluated from detection data and operation data are input. The detection data and operation data used for calculating features include the above-mentioned various detection data and operation data. The detection data and the operation data as inputs to the first estimation model 422a may be a combination of appropriate detection data and operation data selected from the detection data and operation data that are exemplified above. The detection data and the operation data may be time-series data for a part of the entire period from the start of operation to acquisition of data, or may be time-series data for a predetermined number of detections. The number of detection data and operation data may correspond to data of one cycle by the film molding machine 1. The use of groups of data at multiple time points can reduce noise, and an effect of improving estimation accuracy is expected.

Though the use of the features of the detection data and the operation data as inputs to the first estimation model 422a reflects the features of each data and is thus preferred because improvement in the estimation accuracy of the model is expected, the detection data and the operation data themselves may be used as inputs to the first estimation model 422a.

The features obtained from the detection data and the operation data can include, for example, features representing time series features such as RMS which is the root mean square value of various data, RMS which is the root mean square value of the time synchronous mean of various data, an energy ratio of the time synchronous mean of various data, features representing frequency components such as amplitude, intensity, frequency, image data or the like obtained by frequency analysis such as Fourier transform, fast Fourier transform, Hilbert spectrum analysis of various data or the like, and values based on the features such as time derivative, time difference of the features or the like. A different feature may be calculated for each detection data and each operation data. The estimation device 4 stores in advance in the storage unit 42 a table (not illustrated) in which a formula used for calculating a feature and a data item used for calculating the feature are associated with each other for each feature, for example.

The output layer of the first estimation model 422a has nodes that output abnormality status data indicating the presence or absence of abnormality. Note that estimation of abnormality is not limited to be indicated by the presence or absence of abnormality. For example, the estimation model 422 may be configured to output an abnormality degree indicative of the degree of abnormality in numerical values or to output an abnormality level indicative of the degree of anomaly in multiple levels.

The second estimation model 422b has the same configuration as the first estimation model 422a, and receives various features evaluated from detection data and operation data as input. The items of the features as input to the first estimation model 422a may be the same as or different from the items of the features as input to the second estimation model 422b. In addition, the items of the detection data and the operation data used for calculating the features as input to the first estimation model 422a may be the same as or different from the items of the detection data and the operation data as inputs to the second estimation model 422b. The second estimation model 422b may further be configured to use the abnormality status data estimated by the first estimation model 422a as an input element.

The output layer of the second estimation model 422b has nodes that output failure probability data. The failure probability data represents the probability of occurrence of failure in the film molding machine 1 in a future point after a predetermined period from the present time, for example, the probability of occurrence of failure in the film molding machine 1 after three months. The failure probability represents the life of the film molding machine 1. Note that the estimation model 422 may output a numerical value indicating the remaining life of the film molding machine 1 (how soon the film molding machine 1 will fail) as estimation of the life.

The first estimation model 422a can be generated by preparing training data containing features evaluated from the detection data and operation data labeled with data indicating the presence or absence of abnormality, and by causing an untrained neural network to perform machine learning using the training data. The estimation device 4 acquires training data including data sets in which detection data and operation data during operation acquired from the film molding machine 1 in the past and identification results obtained by identifying the actual presence or absence of abnormality are associated with each other. The estimation device 4 preferably collects a large amount of detection data and operation data related to multiple film molding machines 1 as training data.

The estimation device 4 inputs the feature included in the training data into the input layer of the first estimation model 422a and acquires an identification result of the abnormality status output from the output layer through the computation in the intermediate layer. The estimation device 4 compares the identification results of the abnormality status output from the output layer with the identification result contained in the training data and optimizes parameters such as weights (coupling coefficients) between neurons using the error backpropagation method, for example, so that the identification result output from the output layer approaches a correct value. At the stage before start of the training, the definition information describing the first estimation model 422a is assumed to have default values. When the training is completed by an error and the number of training satisfying predetermined criteria, optimized parameters are obtained. After completion of the training, the estimation device 4 stores the definition information related to the trained first estimation model 422a in the storage unit 42 as the trained first estimation model 422a.

The second estimation model 422b can also be generated in the same manner. As a result of the above-mentioned processing, it is possible to build the first estimation model 422a trained to properly identify the presence or absence of abnormality against the features of the molding information and the second estimation model 422b trained to properly identify a failure probability against the features of the molding information. Note that the configurations of the first estimation model 422a and the second estimation model 422b are not limited to be the same. For example, the first estimation model 422a may be a binary classification model while the second estimation model 422b may be a regression model outputting a continuous value.

The estimation model 422 is not limited to be generated and trained by the estimation device 4. The estimation model 422 may be obtained by a model trained on an external server being transmitted to the estimation device 4 and stored in the storage unit 42. The estimation model 422 may be generated on an external server and trained by the estimation device 4.

The configurations of the first estimation model 422a and the second estimation model 422b are not limited as long as they can estimate abnormality or life from the detection data and the operation data. The first estimation model 422a and the second estimation model 422b may be models based on the other learning algorithms, such as, for example, RNN (Recurrent Neural Network), CNN (Convolution Neural Network), GNN (Graph Neural Network), Transformer, support vector machines, decision trees, XGBoost (eXtreme Gradient Boosting), logistic regression, random forests or the like. The first estimation model 422a and the second estimation model 422b may be trained by unsupervised learning. The first estimation model 422a and the second estimation model 422b may have multiple models and may be built by application of ensemble learning such as, for example, bagging, boosting, stacking or the like. The first estimation model 422a and the second estimation model 422b may be configured to estimate abnormality or life using rule-based methods.

In the present embodiment, though the first estimation model 422a for estimating the presence or absence of abnormality and the second estimation model 422b for estimating a failure probability are separately configured, a single learning model may be used to estimate the presence or absence of abnormality and failure probability. Furthermore, the estimation device 4 may be provided with any one of the first estimation model 422a and the second estimation model 422b to estimate only one of the abnormality status and failure probability.

By using wide variety of detection data and operation data as input elements, the estimation model 422 can estimate abnormality or life with high accuracy by taking various features into account. For example, inputting mechanical vibration indicated by acceleration may incorporate the deterioration state of the device member. Inputting resin viscosity may incorporate changes in the properties of the resin. Inputting the number of gels or gel count may incorporate quality abnormality caused by the presence or absence of unmixed parts of resin raw materials and foreign substances. Inputting distortion of the clips may incorporate quality abnormality of the devices. Inputting a crystalline orientation degree may incorporate quality abnormality. Inputting air speed, air volume or pressure inside the oven 141 may incorporate the environment in the oven 141. Inputting temperature at detection sites and of detection targets may incorporate various temperature environments. Inputting a charge amount on the film may incorporate poor film winding and quality abnormality in the vicinity of the winder 15. Inputting a synchronization error indicated by the phase difference between the left and right clips may incorporate the sliding load and quality change caused by device load and device deterioration. Inputting a line tension may incorporate the wear condition of the rails. Inputting motor torques, rpm and rotational speed at detection sites and of the detection targets may incorporate a deteriorated state of the driving unit.

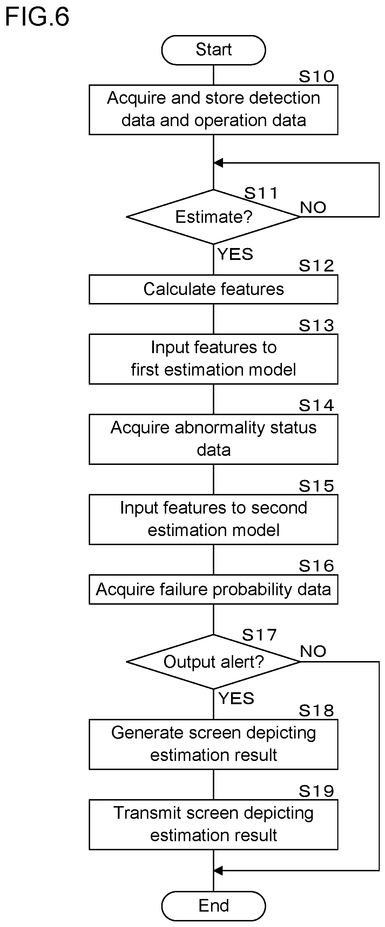

FIG. 6 is a flowchart illustrating one example of a processing procedure to be executed by the estimation device 4. The control unit 41 of the estimation device 4 executes the following processing according to the program 4P stored in the storage unit 42. The control unit 41 starts the following processing at predetermined or appropriate intervals.

The control unit 41 of the estimation device 4 acquires, by a function as an acquisition unit, molding information including detection data and operation data during continuous operation through the data collection device 3 and stores the acquired molding information in the molding information DB 421 (step S10). The molding information is associated with the machine ID of the film molding machine 1. The control unit 41 may collectively acquire multiple detection data and operation data or independently acquire detection data and operation data each time they are detected. The timing when the molding information is received may be a time at which traffic volume in the network N2 is relatively free.

The control unit 41 determines whether or not the estimation processing is to be executed (step S11). If determining that the estimation processing is not to be executed by a pre-set start condition not being satisfied (S11: NO), the control unit 41 returns the processing to step S11 to wait until a start condition is satisfied. The start condition may be acquisition of detection data and operation data of a pre-set number of detections, a pre-set estimation timings and the like.

If determining that the estimation processing is to be executed by the pre-set start condition being satisfied (S11: YES), the control unit 41 calculates various features based on the acquired time-series detection data and operation data (step S12). The control unit 41 specifies a calculation method used for calculating each feature as well as detection data and operation data by referring to a table in which formula used for calculating features and data items are associated with each other, for example.

The control unit 41 inputs, by a function as an estimation unit, the calculated features of the detection data and the operation data to the first estimation model 422a (step S13), and acquires abnormality status data output from the first estimation model 422a (step S14). The processing of steps S13 and S14 presumes abnormality in the film molding machine 1.

The control unit 41 inputs, by a function as an estimation unit, the calculated features of the detection data and the operation data to the second estimation model 422b (step S15), and acquires failure probability data output from the second estimation model 422b (step S16). The processing of steps S15 and S16 estimates the life of the film molding machine 1.

The control unit 41 determines whether or not an alert is to be output (step S17). If the estimation result corresponds to at least one of abnormality being present and the failure probability being equal to or greater than a pre-set threshold, the control unit 41 determines that an alert is to be output. If the estimation result corresponds to abnormality being absent and the failure probability being less than a pre-set threshold, the control unit 41 determines that an alert is not to be output.

If determining that an alert is not to be output (S17: NO), the control unit 41 ends the processing. If determining that an alert is to be output (S17: YES), the control unit 41 generates a screen depicting estimation results of the abnormality and life of the film molding machine 1 (step S18). The screen depicting the estimation results is one example of alert information notifying abnormality and life of the film molding machine 1. The control unit 41 transmits the generated screen depicting the estimation results to the terminal device 5a of the user corresponding to the machine ID of the film molding machine 1 and the terminal device 5b of a service provided (step S19). The control unit 41 may transmit the estimation results to the control device 16. The control unit 41 ends the series of processing.

The control unit 41 repeatedly executes the above-mentioned processing during the continuous operation of the film molding machine 1. Estimation of abnormality and life is executed based on the detection data and operation data detected during continuous operation while continuous operation is kept, whereby feedback of the estimation results can be performed on the operation of the film molding machine 1.

Though an example where the estimation device 4 executes the series of processing is described above, the subject of each processing is not limited. Each processing in the flowchart may be executed by, for example, the control device 16, the data collection device 3 or the terminal device 5. The estimation model 422 is deployed on the control device 16 or the data collection device 3, so that the estimation processing for abnormality or life may be executed on the control device 16 side or the data collection device 3 side.

In the aforementioned processing, the abnormality estimation processing of steps S13 and S14 and the life estimation processing of steps S15 and S16 may be performed interchangeably or in parallel. One of the abnormality estimation processing and the life estimation processing may be skipped.

The estimation device 4 may retrain the estimation model 422 based on the molding information obtained during the continuous operation. The estimation device 4 receives identification results of the abnormality or life for the molding information obtained during a predetermined period from the service provider, for example. The estimation device 4 retrains the estimation model 422 using information containing the molding information labeled with the acquired identification result of the abnormality or life to update the estimation model 422. The training data used for retraining may include molding information acquired from multiple film molding machines 1.

The estimation device 4 may evaluate the accuracy of the estimation model 422 using an evaluation method such as cross-validation, for example, and update the estimation model 422 if the evaluation indicator satisfies predetermined criteria. The estimation device 4 may receive the necessity of update of the estimation model 422 from the service provider. This can improve the estimation accuracy of the abnormality or life through implementation of the present system.

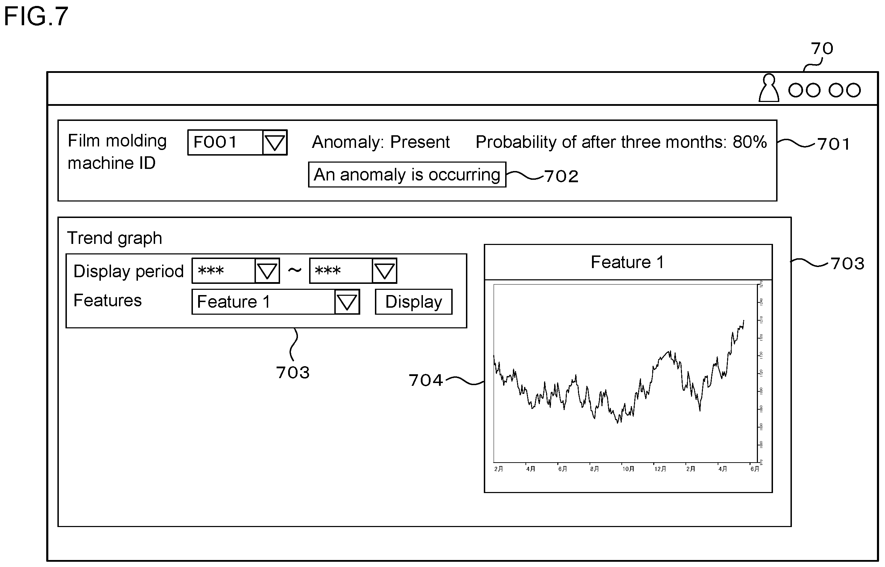

FIG. 7 is a schematic diagram illustrating one example of the screen 70 illustrating estimation results of the abnormality or life to be displayed on the terminal devices 5a, 5b. The screen 70 has a result display section 701 displaying estimation results of the abnormality status and failure probability.

The estimation device 4 acquires estimation results by the estimation model 422 and displays the acquired abnormality status and failure probability on the result display section 701. The estimation device 4 further outputs alert information through the screen 70 by displaying, on the screen 70, an alert display section 702 for displaying the text or the like indicating that the estimation result of the abnormality or life is abnormal.

The screen 70 has a trend display section 703 for displaying a trend of the features. The trend display section 703 contains a reception section 704 for receiving a period during which a trend is displayed and a type of the feature and a trend graph display section 705 for displaying a trend graph. The reception section 704 has a pull-down menu, for example. The user or the service provider can select an arbitrary period and a type of the feature by opening the pull-down menu. The list of the type of features in the pull-down menu includes the features used as input information for the estimation model 422.

If receiving selection of a period or a type of the feature through the terminal devices 5a, 5b, the estimation device 4 reads the detection data and the operation data during the selected period from the molding information DB 421. The estimation device 4 generates a time-series graph representing the trend of the selected feature based on the read detection data and operation data, and displays the graph in the trend display section 703. Note that the trend display section 703 may display the trends of the detection data and operation data in place of or in addition to the feature.

Though an example where the alert information is output together with the estimation results is described above, the estimation device 4 may only output alert information notifying abnormality of the film molding machine 1 to the terminal devices 5a, 5b. The alert information may be in the form of, for example, a message, sound, alert sound or the like.

The estimation device 4 may provide the screen 70 illustrated in FIG. 7 in response to requests from the terminal devices 5a, 5b regardless of the presence or absence of abnormality. Each user or each service provider accesses a service provision site using a browser, for example, to view and check the state of the film molding machine 1 owned by the user at an arbitrary timing.

According to the present embodiment, the state of the film molding machine 1 such as abnormality or life of the film molding machine 1 can be estimated with high accuracy based on the various detection data acquired from the detectors 2 for detecting the state of the film molding machine 1. The estimation results allow the user to accurately grasp the state of the film molding machine 1. In the conventional film molding machine, the detection data by the detectors 2 has been mainly used for operation control, and detection of the state of the film molding machine 1 during operation was not taken into account in estimating the abnormality or life. In the present embodiment, the detectors 2 aimed at maintenance of the film molding machine 1 are provided, so that more detection data than those obtained by the conventional film molding machine 1 can be collected and utilized for state analysis.

The detection data is collected during the continuous operation of the film molding machine 1, and the abnormality or life is estimated based on the collected data, which allows the user to grasp the state of the film molding machine at an early stage. The ability to respond before conditions deteriorate can simplify the maintenance of the device and reduce production downtime.

The use of the estimation model 422 enables estimation of the abnormality or life of the film molding machine 1 with ease and high accuracy. The use of multiple detection data indicating the state of the film molding machine 1 as input information for the estimation model 422 can improve the estimation accuracy of the abnormality or life. The detection data and the operation data are subject to predetermined preprocessing of calculating features or the like, whereby information suitable for abnormality estimation and life estimation can be provided to the estimation model 422, which improves the estimation accuracy.

The estimation device 4 can accumulate a huge amount of data on a cloud and can provide the terminal device 5 with the trend of the accumulated huge amount of data and the estimation results of the abnormality or life based on the data. The user and the service provider can visually identify the state of the film molding machine 1 clearly at an arbitrary timing.

### Embodiment 2

In Embodiment 2, a configurational example where estimation models 422 or features depending on the film molding machines 1 are used will be described. The difference from Embodiment 1 is mainly described below, and components corresponding to those in Embodiment 1 will be denoted by the same reference codes and will not be described in detail here.

The estimation device 4 according to Embodiment 2 stores multiple types of estimation models 422 generated by different algorithms in the storage unit 42. Prior to estimation of abnormality or life according to the molding information, the estimation device 4 determines the estimation model 422 to be used for estimating the abnormality or life based on the type of the film molding machine 1 owned by the user and the molding information collected from this film molding machine 1. The determination of the estimation model 422 can be performed based on the estimation accuracy for each of the estimation models 422. For example, the accuracy of each of the estimation models 422 is evaluated by an evaluation method such as cross-validation or the like based on the estimation results of the estimation models 422 for the test data of the molding information in the film molding machine 1. The estimation model 422 with the highest accuracy is selected from all the prepared estimation models 422 to determine the estimation model 422.

The estimation device 4 may select multiple estimation models 422 with high estimation accuracy and estimate abnormality or life using the selected multiple estimation models 422. The estimation device 4 estimates abnormality or life by employing estimation results of multiple types of estimation models 422 based on majority rule or performing weighted integration.

By fine-tuning the trained estimation model 422 having been generated in advance, the estimation device 4 may generate the estimation model 422 customized to estimate the abnormality or life of the film molding machine 1 owned by the user.

The estimation device 4 may select features used as input information for the estimation model 422 from multiple features that are set in advance depending on the type of the film molding machine 1 owned by the user. The features used as input information can be determined, for example, based on the degree of contribution of the features. For example, estimation with the estimation model 422 is performed using multiple features set in advance, and feature importance in SHAP (SHapley Additive exPlanation), LIME (Local Interpretable Model-Agnostic Explanations), decision tree-based algorithm model or the like is used to calculate the degree of contribution of the input data corresponding to each feature. The estimation device 4 determines the features to be used as input information by selecting, for example, the features with the calculated contribution degree greater than or equal to a predetermined value, or selecting a predetermined number of the features in descending order from the largest degree of contribution.

The estimation device 4 stores, in the storage unit 42, the machine ID of the determined estimation model 422 as well as the types of the features used as the input information and the machine ID of the film molding machine 1 to which this estimation model 422 and the features are applied, in association with each other.

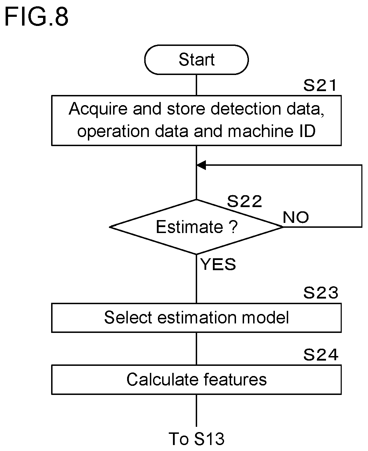

FIG. 8 is a flowchart illustrating an example of the processing procedure to be executed by the estimation device 4 according to Embodiment 2.

The control unit 41 of the estimation device 4 acquires the molding information containing the detection data and the operation data obtained during continuous operation and the machine ID of the film molding machine 1 in association with each other and stores the acquired molding information in the molding information DB 421 (step S21).

The control unit 41 determines whether or not the estimation processing is to be executed (step S22). If determining that the estimation processing is not to be executed based on the pre-set start condition not being satisfied (S22: NO), the control unit 41 returns the processing to step S22 to wait until the start condition is satisfied.

If determining that the estimation processing is to be executed by the pre-set start condition being satisfied (S22: YES), the control unit 41 selects an estimation model 422 that is associated with the acquired machine ID of the film molding machine 1 (step S23). At step S23, the control unit 41 specifies the estimation model 422 corresponding to the acquired machine ID based on the pre-stored correspondence between the film molding machines 1 and the estimation models 422 to be applied.

The control unit 41 calculates various features based on the acquired time-series detection data and operation data (step S24). In the case where features to be used are set for each type of the film molding machine 1, the control unit 41 specifies the features associated with the acquired machine ID of the film molding machine 1 based on the pre-stored correspondence between the film molding machines 1 and the applied features, and calculates the specified features.

The control unit 41 hereafter executes processing similar to that in Embodiment 1 to estimate the abnormality and life using the selected estimation model 422 and features.

According to the present embodiment, the use of the estimation model 422 and features depending on the type of the film molding machine 1 owned by the user can improve the estimation accuracy of the abnormality or life. The film molding machines 1 often have configurations significantly different from each other. By setting the type of the estimation model 422 and the features to be used depending on the type of the film molding machine 1, the abnormality or life can highly accurately be estimated according to the state of the film molding machine 1.

The embodiments disclosed herein are illustrative in all respects, and should be considered not to be restrictive. Technical characteristics described in the respective embodiments can be combined with each other, and the scope of the invention is intended to include all modifications within a scope of the appended claims and a scope equivalent to the scope of the appended claims.

The sequence shown in each embodiment is not limited, and to the extent that there is no conflict, each processing procedure may be performed in a different order, or multiple processes may be performed in parallel. The processing entity of each processing is not limited, and the processing of each device may be executed by another device within the scope of consistency.

The matters described in each embodiment can be combined with each other. Moreover, independent claims and dependent claims stated in the scope of claims can be combined with each other in any combination, regardless of the citation format. In addition, the scope of claims uses the form of describing claims that depend on two or more other claims (multi-claim format), though not limited to this form. The scope of claims uses the form of describing multiple claims that depend from at least one multiple claims (multi-multi claims).

Concerning the above-mentioned embodiments, the following clauses are further disclosed.

### Clause 1

An estimation method, comprising:
acquiring detection data related to a state of a film molding machine detected by a detector; and
estimating abnormality or life of the film molding machine by inputting the acquired detection data to an estimation model, the estimation model estimating abnormality or life of a film molding machine in a case where detection data related to a state of the film molding machine is input.

### Clause 2

The estimation method according to clause 1, wherein
the detection data is acquired during continuous operation of the film molding machine; and
abnormality or life of the film molding machine is estimated based on the detection data while the continuous operation is kept.

### Clause 3

The estimation method according to clause 1 or 2, further comprising:
deriving a feature based on the detection data, wherein
abnormality or life of the film molding machine is estimated by inputting the derived feature to the estimation model, the estimation model estimating abnormality or life of a film molding machine in a case where a feature based on detection data related to a state of the film molding machine is input.

### Clause 4

The estimation method according to any one of clauses 1 to 3, further comprising transmitting information indicating the estimated abnormality or life of the film molding machine to a terminal device.

### Clause 5

The estimation method according to any one of clauses 1 to 4, further comprising:
generating information indicating a trend of the detection data based on the detection data in time series; and
transmitting the generated information indicating a trend of the detection data to a terminal device.

### Clause 6

The estimation method according to any one of clauses 1 to 5, wherein
the film molding machine is provided with an extruder, a casting device, an MD stretcher, a TD stretcher and a winder, and
the detection data includes a physical quantity related to the extruder, a physical quantity related to the casting device, a physical quantity related to the MD stretcher, a physical quantity related to the TD stretcher or a physical quantity related to the winder.

### Clause 7

The estimation method according to any one of clauses 1 to 6, wherein
the film molding machine is provided with an extruder, a casting device, an MD stretcher, a TD stretcher and a winder, and
the detection data includes at least one of acceleration in the extruder, resin viscosity in the extruder, acceleration in the casting device, a gel count on a film in the casting device, acceleration in the MD stretcher, acceleration in the TD stretcher, air speed in the TD stretcher, air volume in the TD stretcher, distortion of a film gripper in the TD stretcher, a phase difference between a pair of left and right film grippers in the TD stretcher, a crystal orientation degree in the TD stretcher, a gel count on a film in the TD stretcher and a charge amount on a film in the winder.

### Clause 8

The estimation method according to any one of clauses 1 to 7, wherein the detection data selected from a plurality of types of pre-set detection data is input to the estimation model.

### Clause 9

The estimation method according to any one of clauses 1 to 8, further comprising:
preparing a plurality of types of estimation models generated by different algorithms; and
selecting one of the estimation models to be used depending on a type of the film molding machine.

### Clause 10

The estimation method according to any one of clauses 1 to 9, wherein
the estimation model includes a plurality of models, and
abnormality or life of the film molding machine is estimated based on outputs from the plurality of models.

### Reference Signs List

100 estimation system
1 film molding machine
11 extruder
12 casting device
13 MD stretcher
14 TD stretcher
15 winder
16 control device
2 detector
3 data collection device
31 control unit
32 storage unit
33 communication unit
34 data input unit
4 estimation device
41 control unit
42 storage unit
43 communication unit
4A recording medium
4P program
421 molding information DB
422 estimation model
5a, 5b terminal device

## Claims

1. An estimation method, comprising:
acquiring detection data related to a state of a film molding machine detected by a detector; and
estimating abnormality or a life of the film molding machine by inputting the acquired detection data to an estimation model, the estimation model estimating abnormality or life of a film molding machine in a case where detection data related to a state of the film molding machine is input.

2. The estimation method according to claim 1, wherein
the detection data is acquired during continuous operation of the film molding machine, and
abnormality or life of the film molding machine is estimated based on the detection data while the continuous operation is kept.

3. The estimation method according to claim 1 or 2, further comprising:
deriving a feature based on the detection data, wherein
abnormality or life of the film molding machine is estimated by inputting the derived feature to the estimation model, the estimation model estimating abnormality or life of a film molding machine in a case where a feature based on detection data related to a state of the film molding machine is input.

4. The estimation method according to any one of claims 1 to 3, further comprising transmitting information indicating the estimated abnormality or life of the film molding machine to a terminal device.

5. The estimation method according to any one of claims 1 to 4, further comprising:
generating information indicating a trend of the detection data based on the detection data in time series; and
transmitting the generated information indicating a trend of the detection data to a terminal device.

6. The estimation method according to any one of claims 1 to 5, wherein
the film molding machine is provided with an extruder, a casting device, an MD stretcher, a TD stretcher and a winder, and
the detection data includes a physical quantity related to the extruder, a physical quantity related to the casting device, a physical quantity related to the MD stretcher, a physical quantity related to the TD stretcher or a physical quantity related to the winder.

7. The estimation method according to any one of claims 1 to 6, wherein
the film molding machine is provided with an extruder, a casting device, an MD stretcher, a TD stretcher and a winder, and
the detection data includes at least one of acceleration in the extruder, resin viscosity in the extruder, acceleration in the casting device, a gel count on a film in the casting device, acceleration in the MD stretcher, acceleration in the TD stretcher, air speed in the TD stretcher, air volume in the TD stretcher, distortion of a film gripper in the TD stretcher, a phase difference between a pair of left and right film grippers in the TD stretcher, a crystal orientation degree in the TD stretcher, a gel count on a film in the TD stretcher and a charge amount on a film in the winder.

8. The estimation method according to any one of claims 1 to 7, wherein the detection data selected from a plurality of types of pre-set detection data is input to the estimation model.

9. The estimation method according to any one of claims 1 to 8, further comprising:
preparing a plurality of types of estimation models generated by different algorithms; and
selecting one of the estimation models to be used depending on a type of the film molding machine.

10. The estimation method according to any one of claims 1 to 9, wherein
the estimation model includes a plurality of models, and
abnormality or life of the film molding machine is estimated based on outputs from the plurality of models.

11. A computer program causing a computer to execute processing of:
acquiring detection data related to a state of a film molding machine detected by a detector; and
estimating abnormality or life of the film molding machine by inputting the acquired detection data to an estimation model, the estimation model estimating abnormality or life of a film molding machine in a case where detection data related to a state of the film molding machine is input.

12. An estimation device, comprising:
an acquisition unit that acquires detection data related to a state of a film molding machine detected by a detector; and
an estimation unit that estimates abnormality or life of the film molding machine by inputting the acquired detection data to an estimation model, the estimation model estimating abnormality or life of a film molding machine in a case where detection data related to a state of the film molding machine is input.

13. An estimation system, comprising:
a film molding machine;
a detector; and
an estimation device, wherein
the estimation device comprises
an acquisition unit that acquires detection data related to a state of the film molding machine detected by the detector, and
an estimation unit that estimates abnormality or life of the film molding machine by inputting the acquired detection data to an estimation model, the estimation model estimating abnormality or life of a film molding machine in a case where detection data related to a state of the film molding machine is input.
